# EUROPEAN PATENT SPECIFICATION

(11) **EP 3 800 529 B1**
(45) Date of publication and mention of the grant of the patent: **24.06.2026**
(21) Application number: 20198134.7
(22) Date of filing: 24.09.2020
(51) Int. Cl.: G06F 3/01

(54) **EYETRACKING METHOD, EYETRACKER AND COMPUTER PROGRAM**
AUGENVERFOLGUNGSVERFAHREN, AUGENVERFOLGER UND COMPUTERPROGRAMM
PROCÉDÉ DE SUIVI OCULAIRE, SUIVEUR OCULAIRE ET PROGRAMME INFORMATIQUE

(30) Priority: 30.09.2019 SE 1951108
(43) Date of publication of application: 07.04.2021
(73) Proprietor: Tobii AB, 182 17 Danderyd (SE)
(72) Inventor: Andersson, Richard, 182 17 Danderyd (SE); Johansson Tornéus, Daniel, 182 17 Danderyd (SE)
(74) Representative: Novagraaf Group

(56) References cited:
- HOOGE IGNACE ET AL: "The pupil is faster than the corneal reflection (CR): Are video based pupil-CR eye trackers suitable for studying detailed dynamics of eye movements?", VISION RESEARCH, ELSEVIER, AMSTERDAM, NL, vol. 128, 22 September 2016 (2016-09-22), pages 6 - 18, XP029775902, ISSN: 0042-6989, DOI: 10.1016/J.VISRES.2016.09.002

## Description

### TECHNICAL FIELD

The invention relates generally to efficient and reliable tracking of a subject's gaze point. In particular, the present invention concerns a method performed in an eyetracker and an eyetracker. The invention also relates to a computer program product and a non-volatile data carrier.

### BACKGROUND

Eye/gaze tracking is the process of measuring the motion of an eye relative to the head, or the point of gaze. An eyetracker is a device for measuring eye positions and eye movements. Eyetrackers are used in many different applications. There are various methods for measuring eye movement. The most popular variant uses video images from which the eye position is extracted. Other methods use search coils, or are based on the electrooculogram. Originally, eyetracking technology was used in research on the visual system, in psychology, in psycholinguistics, marketing and in product design. Today, we see an increasing use of eyetrackers as input devices for human-computer interaction in various kinds of devices and apparatuses ranging from smartphones to aircrafts. To enable processing efficient eyetracking in consumer products it is important that the tracking algorithm is capable of identifying a subject's pupil in simple and yet reliable manner. After having identified the subject's pupil, the tracking algorithm must also be able to maintain the tracking. This is an especially challenging task when the subject performs rapid eye movements, so-called saccades.

US 2019/0094963 describes techniques for refining a ballistic prediction of eye movements. In one example, the eye tracking system records images over time of content presented on a display. Saccade data are received and used as a trigger to retrieve particular ones of the recoded images. The eye tracking system compares the images to identify a change in the content. The location of this change corresponds to a sub-area of the display. The output of the ballistic prediction includes a landing point representing an anticipated gaze point. This landing point may be adjusted such that a gaze point is now predicted to fall within the sub-area when the change is significant.

The article Hooge, I., et al., "The pupil is faster than the corneal reflection (CR): Are video based pupil-CR eye trackers suitable for studying detailed dynamics of eye movements?", Vision Research 128 (2016), pp 6-18 questions whether the p-CR (pupil minus corneal reflection) technique is appropriate to investigate saccade dynamics. In two experiments, the researchers investigated the dynamics of pupil, CR and gaze signals obtained from a standard SensoMotoric Instruments Hi-Speed eye tracker. They found many differences between the pupil and the CR signals, for example differences concern timing of the saccade onset, saccade peak velocity and post-saccadic oscillation (PSO). The researchers further obtained that pupil peak velocities were higher than CR peak velocities. Saccades in the eye trackers' gaze signal (that is constructed from p-CR) appear to be excessive versions of saccades in the pupil signal. In the article, it is therefore concluded that the pupil-CR technique is not suitable for studying detailed dynamics of eye movements.

The above teachings provide some guidance as how to maintain the eyetracking during rapid and/or unanticipated eye movements. However, for today's and future eyetracker implementations, it is desirable to improve further the accuracy of the eyetracking algorithm. For instance, in computer graphics using foveated rendering it is imperative that the gaze point of a subject is known at all points in time. Preferably, also future gaze points should be known with some degree of certainty. Namely, in foveated rendering, a picture is rendered with high fidelity only where the viewer is actually looking. The rest of the picture is kept at low fidelity rendering. Thus, substantial amounts of computation power can be saved. In many cases, the information displayed to the subject is dynamic, such as in video streams and video games. Here, even if the landing place for the gaze point can be predicted in terms of position and time, it is difficult to pre-render relevant graphic data because the information to present will only be known very briefly in advance. Consequently, it is important to detect the occurrence of a saccade as quickly as possible.

### SUMMARY

One object of the present invention is therefore to offer an eyetracking solution for mitigating the above problems.

According to one aspect of the invention, this object is achieved by a method performed in an eyetracker, which method involves the steps of:
obtaining input signal components (S_{CR}, S_{P}) describing a position of a cornea reference point for a subject's eye and a position of a pupil of said eye (E);
determining, based on the input signal components (S_{CR}, S_{P}), that a saccade is in progress during which saccade a gaze point of the subject's eye moves from a first point to a second point where the gaze point is fixed; and during the saccade
characterised in that:
   based on said determination that a saccade is in progress, generating a tracking signal (D_{GP}) describing the gaze point of the eye based on a first subset of input signal components (S_{CR}) of the input signal components (S_{CR}, S_{P}), which first subset of input signal components (S_{CR}) describes the position of the cornea reference point for the eye;
   the method further comprising
   determining a test parameter (P) describing a deviation between a first estimated displacement (D1) of the subject's eye derived based on the first subset of input signal components (S_{CR}) describing the position of the cornea reference point for the eye and a second estimated displacement (D2) of the subject's eye derived based on a second subset of input signal components (S_{P}) in the input signal components (S_{CR}, S_{P}) which signal component (S_{P}) describes the position of the pupil of said eye, and
      determining that the saccade is in progress if the test parameter (P) exceeds a second threshold value (T2) and generating a tracking signal (D_{GP}) based on the first subset of input signal components (S_{CR}) and the second subset of input signal components (S_{P}) until it is determined that a saccade is in progress;
   determining if a fixation point has been reached, meaning the saccade has ended, and if so, generating a tracking signal (D_{GP}) based on the first subset of input signal components (S_{CR}) and the second subset of input signal components (S_{P}).

This method is advantageous because it avoids any uncertainties that may result from deviations between the input signal components describing the cornea reference point and the pupil position. Consequently, high reliability and accuracy of the eyetracking can be maintained during as well as after eye movements in the form of saccades.

According to one embodiment of this aspect of the invention, the method further involves determining if the second point (GP2) has been reached by the subject's eye based on the first subset of input signal components (S_{CR}) of the input signal components (S_{CR}, S_{P}). In other words, the saccade landing position is determined based on the data that describes the cornea reference point for a subject's eye. Namely, at the end of a saccade, this data provides a more reliable basis than for example data describing the position of the pupil.

The method, after having determined that the saccade is in progress, involves continuing to generate the tracking signal (D_{GP}) based on the first subset of input signal components (S_{CR}) of the input signal components during a period of time (T_{osc}) after a point in time (t₂) at which the second point (GP2) was determined. In other words, also somewhat after that the saccade has ended, the tracking signal is based on the input signal components (S_{CR}, S_{P}) that describe the cornea reference point for the eye. Due to various overshoot effects in the pupil-based input signal components this has proven to provide the most reliable tracking.

Further preferably, after expiry of said period of time (T_{osc}), the method involves generating the tracking signal (D_{GP}) based on the input signal components (S_{CR}, S_{P}). Namely, after that the overshoot effects in the pupil-based input signal components have decayed; reliable eyetracking may again be attained based on all the input signal components.

According to yet another embodiment of this aspect of the invention, the method involves determining a duration of the period of time (T_{osc}) based on at least one calibration process that is executed in respect of the subject whose eye is being tracked. The at least one calibration process establishes a typical time within which a test parameter (P) attains a value below a first threshold value (T1). The test parameter (P), in turn, expresses a deviation between a first estimated displacement (D1) of the subject's eye derived based on the first subset of input signal components (S_{CR}) describing the cornea reference point for the eye and a second estimated displacement (D2) of the subject's eye derived based on a second subset of input signal components (S_{P}) in the input signal components (S_{CR}, S_{P}), which describes the position of the pupil of said eye. Thus, in connection with saccades, the eyetracking can be optimized with respect to a particular user.

Instead of determining the duration of the period of time based on at least one calibration process executed in respect of the particular subject whose eye is to be tracked, according to an alternative embodiment of the invention, the duration of the period of time (T_{osc}) is instead determined from a default value derived based on at least one calibration process executed in respect of at least one representative subject. Here, the at least one calibration process establishes a typical time within which the test parameter (P) attains a value below the first threshold value (T1). Also in this case, the test parameter (P) expresses a deviation between a first estimated displacement (D1) of the subject's eye derived based on the first subset of input signal components (S_{CR}) describing the position of the cornea reference point for the eye and a second estimated displacement (D2) of the subject's eye derived based on a second subset of input signal components (S_{P}) in the input signal components (S_{CR}, S_{P}), which describes the position of the pupil of the eye. This approach is desirable because it accomplishes reliable eyetracking in connection with saccades without requiring a personalized calibration for each user.

The at least one calibration process may involve projecting a moving visual stimulus on a screen, which visual stimulus the subject is prompted to follow in saccadic movements with his/ her gaze point. While the subject is doing so, the process further involves registering the input signal components (S_{CR}, S_{P}), and based thereon determining the period of time (T_{osc}) following the time instance when the end point for the saccade was determined.

According to still another embodiment of this aspect of the invention, the method further involves determining a point in time (t₂) when the gaze point has reached the second point (GP2) (i.e. the end point) based on the first point (GP1) (i.e. the start point) and the test parameter (P) describing the deviation between the above-mentioned first and second estimated displacements (D1, D2) of the subject's eye. Consequently, the saccade's end point in time can be derived in a straightforward manner without actually tracking the gaze point during the saccade.

According to a further embodiment of this aspect of the invention, a position for the second point (i.e. the end point GP2) is determined based on the point in time (t₂) when the gaze point reached the second point (GP2) and geometric data derived from a calibration process wherein a typical time is established within which a test parameter (P) attains a value below a first threshold value (T1). The test parameter (P) expresses the deviation between the first and second estimated displacements (D1, D2) of the subject's eye, i.e. a displacement (D1) derived based on the first subset of input signal components (S_{CR}) describing the position of the cornea reference point for the eye and a displacement (D2) derived based on a second subset of input signal components (S_{P}) in the input signal components (S_{CR}, S_{P}), which signal describes the position of the pupil of said eye. Hence, the saccade end point may be determined without having to track the gaze point during the saccade as such.

According to another aspect of the invention the object is achieved by a computer program product loadable into a non-volatile data carrier communicatively connected to a processing circuitry. The computer program product contains software configured to, when the computer program product is run on the processing circuitry, cause the processing circuitry to: obtain input signal components (S_{CR}, S_{P}) describing a cornea reference point for a subject's eye and a position of a pupil of said eye; characterized in that when the computer program product is run on the processing circuitry, the software is further configured to cause the processing circuitry to: determine, based on the input signal components (S_{CR}, S_{P}), that a saccade is in progress during which saccade a gaze point of the subject's eye moves from a first point (GP1) to a second point (GP2) where the gaze point is fixed; and during the saccade, based on said determination that a saccade is in progress, generate a tracking signal (D_{GP}) describing the gaze point of the eye based on a first subset of input signal components (S_{CR}) of the input signal components (S_{CR}, S_{P}), which first subset of input signal components (S_{CR}) describes the cornea reference point for the eye, wherein the software is further configured to cause the processing circuitry to determine a test parameter (P) describing a deviation between a first estimated displacement (D1) of the subject's eye derived based on the first subset of input signal components (S_{CR}) describing the position of the cornea reference point for the eye and a second estimated displacement (D2) of the subject's eye derived based on a second subset of input signal components (S_{P}) in the input signal components (S_{CR}, S_{P}) which second subset of input signal components (S_{P}) describes the position of the pupil of said eye, and determine that the saccade is in progress if the test parameter exceeds a second threshold value and generate a tracking signal based on the first subset of input signal components (S_{CR}) and the second subset of input signal components (S_{P}) until it is determined that a saccade is in progress; determine if a fixation point has been reached, meaning the saccade has ended, and if so, generate a tracking signal based on the first subset of input signal components (S_{CR}) and the second subset of input signal components (S_{P}).

According to another aspect of the invention, the object is achieved by a non-volatile data carrier containing such a computer program.

The advantages of this computer program product and non-volatile data carrier are apparent from the discussion above with reference to the method performed in the eyetracker.

According to yet another aspect of the invention, the above object is achieved by an eyetracker containing a processing circuitry, which is configured to: obtain input signal components (S_{CR}, S_{P}) describing a cornea reference point for a subject's eye and a position of a pupil of said eye; characterized in that the processing circuitry is further configured to: determine, based on the input signal components (S_{CR}, S_{P}), that a saccade is in progress during which saccade a gaze point of the subject's eye moves from a first point (GP1) to a second point (GP2) where the gaze point is fixed; and during the saccade, based on said determination that a saccade is in progress, generate a tracking signal (D_{GP}) describing the gaze point of the eye based on a first subset of input signal components (S_{CR}) of the input signal components (S_{CR}, S_{P}), which first subset of input signal components (S_{CR}) describes the position of the cornea reference point for the eye, wherein the processing circuitry is further configured to determine a test parameter (P) describing a deviation between a first estimated displacement (D1) of the subject's eye derived based on the first subset of input signal components (S_{CR}) describing the position of the cornea reference point for the eye and a second estimated displacement (D2) of the subject's eye derived based on a second subset of input signal components (S_{P}) in the input signal components which second subset of input signal components (S_{P}) describes the position of the pupil of said eye, and determine that the saccade is in progress if the test parameter (P) exceeds a second threshold value (T2) and generate a tracking signal based on both subset and the signal until it is determined that a saccade is in progress; determine if a fixation point has been reached, meaning the saccade has ended, and if so, generate a tracking signal (D_{GP}) based on the first subset of input signal components (S_{CR}) and the second subset of signal components (S_{P}).

The advantages of this eyetracker is apparent from the discussion above with reference to the method performed in the eyetracker.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figures 1a-4b: illustrate different profile and front views respectively of an eye that rapidly changes its gaze point from a first to second position;
- Figure 5: shows a diagram exemplifying how an estimated gaze point varies over time while a subject performs a saccade, and wherein the gaze point is estimated based on two different types of input signal components;
- Figure 6: shows a block diagram over an eyetracker according to one embodiment of the invention;
- Figure 7: illustrates, by means of a flow diagram, the general method according to the invention;
- Figure 8: shows a flow diagram illustrating one embodiment of the method according to the invention; and
- Figure 9: illustrates, by means of a flow diagram, how it is determined that a saccade is in progress according to one embodiment of the proposed method.

### DETAILED DESCRIPTION

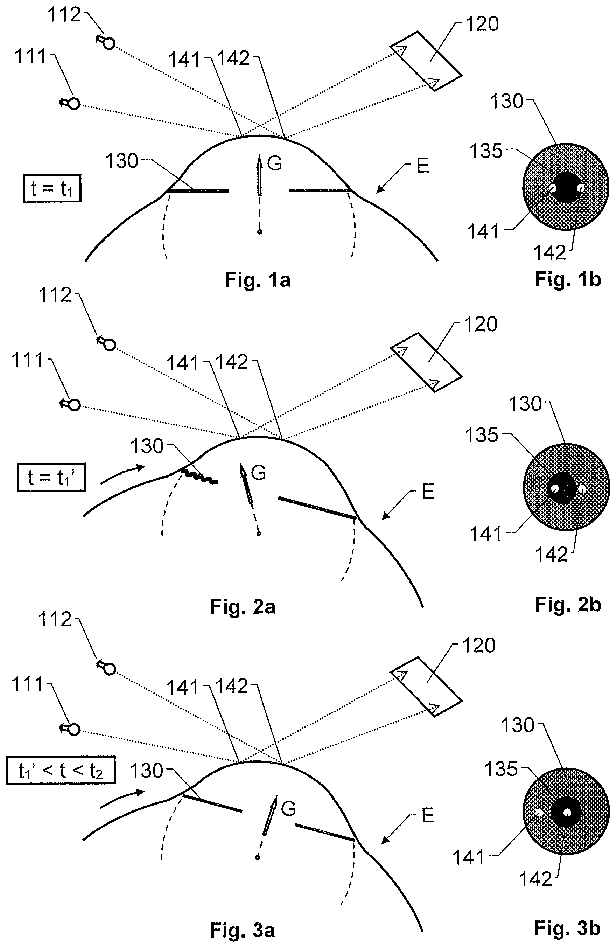

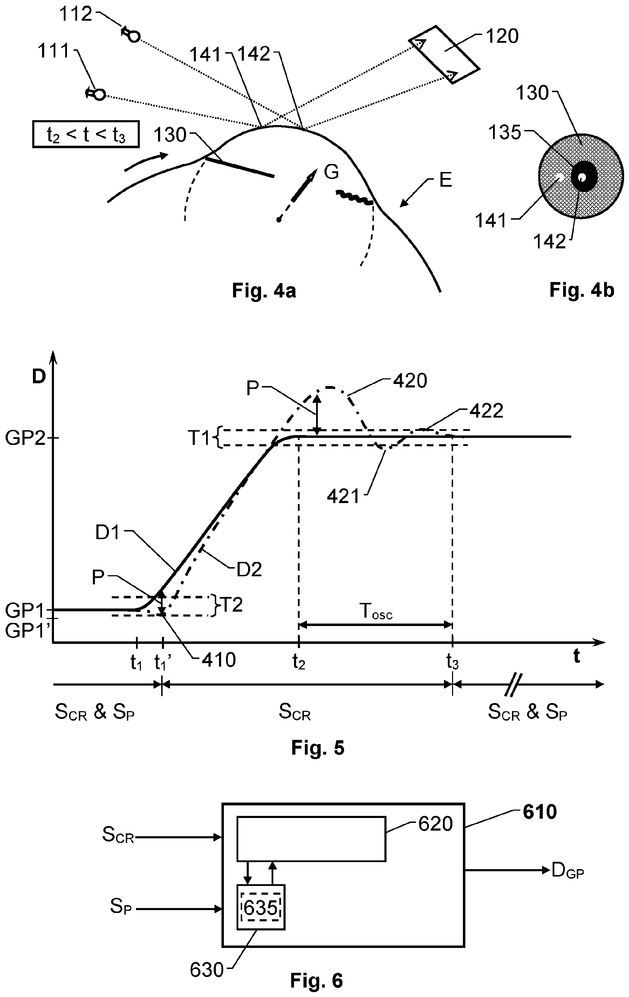

Figure 1a shows a schematic side view of a subject's eye E when, at a first point in time t₁ a gaze G of the eye E is directed towards a first gaze point, for example GP1 exemplified in the diagram of Figure 5. Figure 1b shows a schematic front view of the eye E when its gaze G is directed towards the first gaze point GP1. In other words, Figures 1a and 1b show the eye E in the same orientation, however from different view angles.

In one embodiment of the invention, first and second illuminators 111 and 112 respectively project light towards the eye E. The light from the in the first and second illuminators 111 and 112 preferably lies in the near IR spectrum, so that the light is invisible to the subject and thus does not risk irritating or distracting him/her. Further, the first and second illuminators 111 and 112 are positioned at such an angle relative to the cornea of the eye E that a substantial amount of their light is reflected in the cornea, and thus appear as respective corneal reflections, or glints 141 and 142.

An image sensing apparatus, here very schematically illustrated via a two-dimensional, 2D, light sensor 120, is arranged to register the positions of the glints 141 and 142. In the example shown in Figures 1a and 1b, the glints 141 and 142 are located approximately on the edge between the iris 130 and the pupil 135 of the eye E.

In eyetracking, different techniques may be employed to determine the direction of the gaze G. For example, the 2D positions of the glints 141 and 142 can be used together with data acquired through a personal calibration progress for the subject in question, or based on default values, to derive the direction of the gaze G. For instance, polynomials may express the geometric relationships between the 2D positions of the glints 141 and 142 and the direction of the gaze G. Once the direction of the gaze G is known, information about a position of the eye E can be used to estimate the first gaze point GP1.

Alternatively, instead of using the 2D positions of the glints 141 and 142 as described above, a three-dimensional calculation approach may be applied to determine the direction of the gaze G. In such a case, a first point in space is calculated that represents a cornea center, or a cornea surface center. It is further postulated that the first point in space moves around a second point in space when the eye E changes its direction of the gaze G. Here, the second point in space constitutes an eyeball rotation center. This means that a straight line can be drawn between the first and second points in space, where the extension of the straight line represents the direction of the gaze G. Consequently, it is mathematically possible to replace a 2D position of the pupil 135 with the position of the second point in space.

The above 2D or 3D calculation approaches both rely on at least one cornea reference point. Namely, in the former case, the positions of the corneal reflections/glints 141 and 142 are used directly to determine the direction of the gaze G. In the latter case, the positions of the corneal reflections/glints 141 and 142 are instead used indirectly to determine the direction of the gaze G via said first and second points in space that represent the cornea surface center and the eyeball rotation center respectively.

Other methods may also be employed to determine the cornea surface center, such as time-of-flight imaging and/or capacitive tracking of the eye.

We presume that, at the first point in time t₁, the subject initiates a saccade. This means that the gaze G of the eye E rapidly moves from the first gaze point GP1 in a particular direction, here to the right-hand side of the drawing.

Figures 2a and 2b show schematic side and front views of the eye E at a somewhat later point in time t₁'. Due to inertia effects and the fact that the vitreous body in the eyeball is gelatinous, the iris 130 will not immediately follow the movement of the eye E. Instead, the movement of the iris 130 will lag slightly. This, in turn, results in that the iris 130 is mildly deformed. More precisely, provided a rapid rightward movement, a left side part of the iris 130 is compressed to some extent and a right side part thereof is stretched to a corresponding degree. As is apparent in the front view in Figure 2b, this phenomenon may give the impression of that the direction of the gaze G actually moves in the *opposite* direction, i.e. leftwards instead of rightwards.

Figures 3a and 3b show schematic side and front views of the eye E at yet a somewhat later point in time when the iris 130 has "caught up with" the rightward movement of the rest of the eye E. This means that the essentially all parts of the eye E move rightwards at the same speed, and as result, the iris 130 is much less deformed. Therefore, the image data representing the eye E now correctly indicates that the direction of the gaze G is shifted in the right-hand in relation to the original direction when the gaze G was directed towards the first gaze point GP1.

Figures 4a and 4b show schematic side and front views of the eye E at a point in time when the saccade is over and the movement of the eye E has stopped to direct the gaze G towards a second gaze point GP2 (cf. Figure 5). Again, due to inertia effects and the fact that the vitreous body in the eyeball is gelatinous, the iris 130 will not immediately stop when the eye E does. Instead, there will be an overshoot motion of the iris 130. Specifically, provided that the eye E has stopped after having performed a rapid rightward movement, the left side part of the iris 130 is stretched to some extent and the right side part thereof is compressed to a corresponding degree. This, in turn, causes the effect that the image data representing the eye E appear to indicate that the direction of the gaze G is shifted more in the right-hand direction than what is actually the case. Nevertheless, assuming that the gaze G remains directed towards the second gaze point GP2 for a while, say at least 50 ms, the deformations of the iris 130 will oscillate a few times and equilibrate to a non-deformed state that matches the second gaze point GP2.

Turning now to Figure 5, we see a diagram exemplifying how a displacement D of an estimated gaze point varies over time t from the first gaze point GP1 to the second gaze point GP2 a subject performs a saccade as explained above.

Here, the gaze point is estimated based on two different types of input signal components, namely, on one hand, a first subset of input signal components S_{CR} describing a cornea reference point for a subject's eye E, and on the other hand, a second subset of input signal components S_{P} describing a position of the pupil 135 of the eye E. A first estimated displacement D1 derived based on the first subset of input signal components S_{CR} is shown as a solid line, and a second estimated displacement D2 derived based on the second subset of input signal components S_{P} is shown as a dashed line.

Analogous to what is shown in Figures 2a and 2b, an initial overshoot in the *opposite* direction appears in the second estimated displacement D2. There is, however, no corresponding anomaly in the first estimated displacement D1. Therefore, according to the present invention, a tracking signal describing the gaze point of the eye E is based on both the first and second sets of input signal components S_{CR} and S_{P} until it is determined that a saccade is in progress. After that, i.e. during the saccade, the tracking signal describing the gaze point of the eye E is instead based on the first subset of input signal components S_{CR}. Nevertheless, the saccade as such may preferably be detected based on both the first and second sets of input signal components S_{CR} and S_{P}.

In particular, according to one embodiment of the invention, a test parameter P is determined, which describes a deviation between the first estimated displacement D1 and the second estimated displacement D2 of the subject's eye E. A saccade is determined to be in progress if the test parameter P exceeds a second threshold value T2. In other words, if there is a sufficiently large discrepancy between the two estimated displacements D1 and D2, this is interpreted as a sign of a saccade being instigated.

Here, a largest deviation between the estimated displacements D1 and D2 occur at t₁' when the initial overshoot reaches its peak value due to the deformation of the iris 130. Thereafter, as also is apparent from the diagram in Figure 5, the deviation between the first and second estimated displacements D1 and D2 typically decreases during the actual saccade.

At a point in time t₂, the direction of the gaze G stops at the second gaze point GP2. Hence, the saccade is over. However, at t₂ this is only truly reflected by the first estimated displacement D1. As mentioned above, there is an overshoot in the second estimated displacement D2, and consequently, the deviation between D1 and D2 increases.

Therefore, during the saccade the tracking signal describing the gaze point of the eye E is based on the first subset of input signal components S_{CR}, and according to one embodiment of the invention, the second point GP2 is determined based on the first subset S_{CR} of the input signal components that describes the cornea reference point for a subject's eye E.

According to one embodiment of the invention, the point in time t₂ when the gaze point has reached the second point GP2 is determined based on the first point GP1 and the test parameter P. The test parameter P describes the deviation between the first and second estimated displacements D1 and D2, i.e. estimated gaze points of the subject's eye E that have been derived based on the first subset S_{CR} describing the cornea reference point for the eye E and gaze points of the subject's eye E that have been derived based on the second subset of signal components S_{P} describing the position of the pupil 135 of the eye E.

The point in time t₂ when the saccade is over may be defined as the test parameter P exceeding a first threshold value T1. Consequently, instead of relying on the tracking signal during the saccade, a position for the second point GP2 may be determined based on the point in time t₂ in combination with geometric data. The geometric data, in turn, have been derived from a calibration process wherein a typical time is established within which the test parameter P again returns to a value below the first threshold value T1 after the saccade.

According to the invention, the tracking signal D_{GP} is generated based on the first subset S_{CR} of the input signal components after t₁' when it has been determined that the saccade is in progress.

It is necessary that the tracking signal D_{GP} is continued to be generated based on the first subset S_{CR} of the input signal components also during a period of time T_{osc} after a point in time t₂ at which the second point GP2 was determined, i.e. when the saccade is over. Namely, as is apparent from the diagram in Figure 5, the second set of input signal components S_{P} causes the second estimated displacement D2 to oscillate, and therefore the second set of input signal components S_{P} does not constitute a reliable basis for deriving the gaze point until the period of time T_{osc} has expired. The duration of the period of time T_{osc} varies, inter alia depending on the subject and the magnitude of the saccade. For example, a subject who has aphakia (a person who lacks an endogenous lens) shows very large overshoots with respect to both displacement and time. Somewhat counterintuitive, generally larger saccades result in smaller overshoots and vice versa. However, the duration of the period of time T_{osc} is between 0 ms to 200 ms, preferably 20 ms to 100 ms, and typically around 50 ms.

In any case, after expiry of the period of time T_{osc}, the tracking signal D_{GP} is preferably generated based on all the input signal components S_{CR} and S_{P} again.

According to one embodiment of the invention, a duration of the period of time T_{osc} is determined based on at least one calibration process that is executed in respect of the subject whose gaze point is to be tracked. The at least one calibration process establishes a typical time within which the test parameter P attains a value below the first threshold value T1. As mentioned earlier, the test parameter P expresses the deviation between the first and second estimated displacements D1 and D2. The first estimated displacement D1 of the subject's eye E has been derived based on the first subset of input signal components S_{CR} describing the cornea reference point for the eye E. The second estimated displacement D2 of the subject's eye E has been derived based on the second subset of input signal components S_{P} describing the position of the pupil 135 of the eye E.

Alternatively, the duration of the period of time T_{osc} may instead be determined from a default value derived one or more calibration processes executed in respect of at least one representative subject, i.e. not necessarily the subject whose gaze point is to be tracked. Here, the at least one calibration process establishes a typical time within which the test parameter P attains a value below the first threshold value T1. Again, the test parameter P expresses the deviation between the first and second estimated displacements D1 and D2.

Regardless of whether the at least one calibration process is tailored for the subject whose gaze point is to be tracked, or if a general calibration is made based on one or more representative subjects, the at least one calibration process preferably involves projecting a moving visual stimulus on a screen, which visual stimulus the subject is prompted to follow in saccadic movements with his/her gaze point. While the subject follows these instructions, the input signal components S_{CR} and S_{P} respectively are registered. The period of time T_{osc} is then determined based on the data registered during the calibration process.

As mentioned above, the point in time t₁' when a saccade occurs can be determined exclusively based on the test parameter P, namely when the test parameter P exceeds the second threshold value T2. Analogously, the point in time when the saccade has ended can also be determined exclusively based on the test parameter P, namely when the test parameter P exceeds the first threshold T1. In practice, this means that it is not necessary to track the gaze point during the saccade, as such. At least in some applications, it may be sufficient to know when the saccade is over to regain tracking of the gaze point. For example, (i) the saccade end point in time, (ii) information about the direction of saccade and (iii) a prior calibration process may instead be used to draw conclusions about the end position for the saccade.

Moreover, the point in time when the saccade has ended with respect to the above-mentioned overshoot effects in the pupil-based input signal components can likewise be determined based on the test parameter P, namely when the test parameter P stays below the first threshold T1 again, i.e. after expiry of the period of time T_{osc}.

Figure 6 shows a block diagram over an eyetracker 610 according to one embodiment of the invention. The eyetracker 610 contains a processing circuitry 620. The eyetracker 610 preferably also contains data carrier, i.e. a memory unit 630, which is communicatively connected to a processing circuitry 620 and storing a computer program product 635 including software configured to cause the processing circuitry 620 perform eyetracking according to the method of the invention when the computer program product 635 is run on the processing circuitry 620.

Specifically, this means that the processing circuitry 620 will be caused to obtain input signal components S_{CR} and S_{P}, which describe a cornea reference point for a subject's eye E and a position of a pupil 135 of that eye E respectively.

The processing circuitry 620 will further be caused to determine, based on the input signal components S_{CR} and S_{P} that a saccade is in progress during which saccade the gaze point of the subject's eye E moves from a first point GP1 to a second point GP2 where the gaze point is fixed.

During the saccade, the processing circuitry 620 will be caused to generate a tracking signal D_{GP} describing the gaze point of the eye E based on a subset of the input signal components, which subset S_{CR} describes the cornea reference point for the eye E, however not the position of the pupil 135.

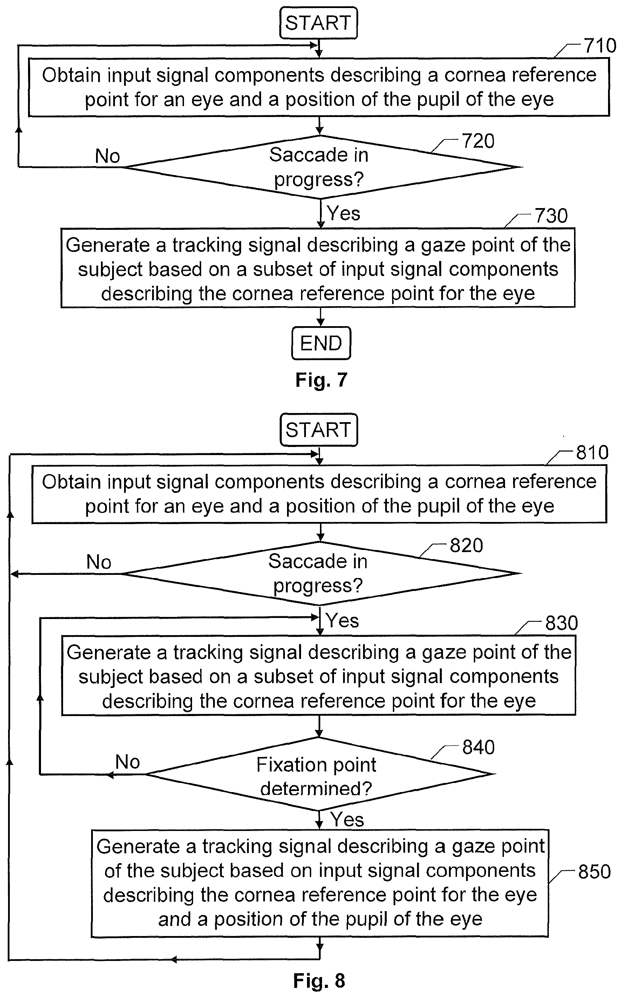

In order to sum up, and with reference to the flow diagram in Figure 7, we will now describe the general method performed in the eyetracker 610 according to the invention.

In a first step 710, input signal components are obtained, which input signal components, on one hand, describe a cornea reference point for a subject's eye and; on the other hand, describe a position of a pupil of that eye. The cornea reference point, in turn, may be represented by a number of cornea reflections, i.e. so-called glints caused by illuminators directed towards the eye. As mentioned above, the glints may either be used directly or indirectly as cornea reference points to determine a gaze direction.

A subsequent step 720 checks if a saccade is in progress, i.e. that the eye's gaze point moves rapidly from a first to a second position. If it is found that a saccade is in progress, a step 730 follows; and otherwise, the procedure loops back to step 710. Whether or not a saccade is in progress is determined based on said input signal components, i.e. based on data concerning the cornea reference point as well as data concerning the pupil position.

In step 730, a tracking signal describing the gaze point of the eye is generated based on the input signal components that describe cornea reference point for the eye. However, when it has been determined that a saccade is in progress, the tracking signal is not generated based on the input signal components that describe the position of the pupil of the eye.

In the most general definition of the invention, the procedure ends after step 730. However, according to embodiments of the invention, the procedure loops back to the initial step after that it has been determined that the saccade is no longer in progress.

Figure 8 shows a flow diagram illustrating one embodiment of the method according to the invention, wherein the procedure loops back to the initial step after the saccade.

The initial steps 810 to 830 are identical to steps 710 to 730 described above with reference to Figure 7. After step 830, however, the procedure does not end. Instead, a step 840 follows in which it is checked if a fixation point has been determined, i.e. if the saccade has ended. If so, a step 850 follows; and otherwise, the procedure loops back to step 830.

In step 850 the tracking signal D_{GP} is generated based on all the input signal components S_{CR} and S_{P}, i.e. describing the cornea reference point for the eye E as well as the position of the pupil 135 of the eye E. After step 850, the procedure loops back to step 810.

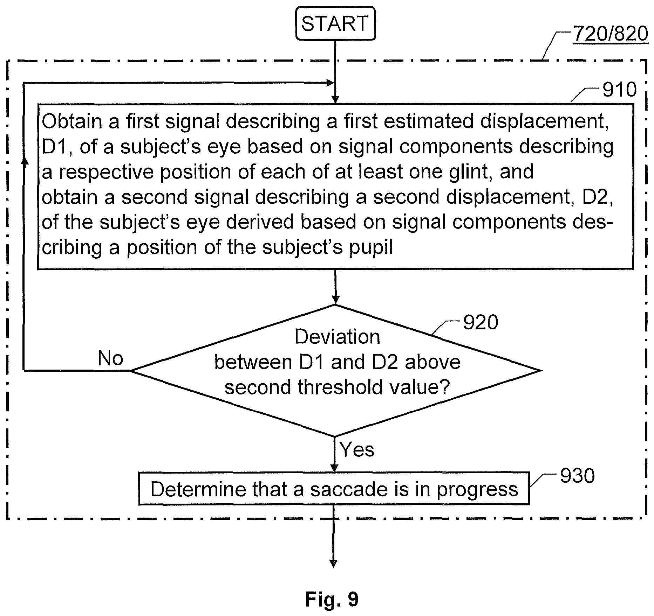

Figure 9 shows a flow diagram illustrating one embodiment of the method according to the invention according to which embodiment it is determined that a saccade is in progress. In other words, Figure 9 exemplifies an implementation of the boxes 720 and 820 in the flow diagrams of Figures 7 and 8 respectively.

In a first step 910, first and second signals are obtained. The first signal describes a first estimated displacement D1 of the subject's eye E, which has been derived based on the first subset of input signal components S_{CR} describing the cornea reference point for the eye E. The second signal describes a second estimated displacement D2 of the subject's eye E has been derived based on the second subset of input signal components S_{P} describing the position of the pupil 135 of the eye E.

In a subsequent step 920, a test parameter P is determined, which describes a deviation between a first and second estimated displacements D1 and D2. If the test parameter P exceeds a second threshold value; a step 930 follows; and otherwise, the procedure loops back to step 910.

In step 930, it is determined that a saccade is in progress, i.e. an output signal from step 720 or 820 is produced.

All of the process steps, as well as any sub-sequence of steps, described with reference to Figures 7 to 9 above may be controlled by means of at least one programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

## Claims

1. A method performed in an eyetracker (610), the method comprising:
obtaining (810) input signal components (S_{CR}, S_{P}) describing a position of a cornea reference point for a subject's eye (E) and a position of a pupil (135) of said eye (E),
determining (820), based on the input signal components (S_{CR}, S_{P}), that a saccade is in progress during which saccade a gaze point of the subject's eye (E) moves from a first point (GP1) to a second point (GP2) where the gaze point is fixed, and during the saccade,
**characterised in that**:
based on said determination that a saccade is in progress, generating (830) a tracking signal (D_{GP}) describing the gaze point of the eye (E) based on a first subset of input signal components (S_{CR}) of the input signal components (S_{CR}, S_{P}), which first subset of input signal components (S_{CR}) describes the position of the cornea reference point for the eye (E);
the method further comprising
determining (910) a test parameter (P) describing a deviation between a first estimated displacement (D1) of the subject's eye (E) derived based on the first subset of input signal components (S_{CR}) describing the position of the cornea reference point for the eye (E) and a second estimated displacement (D2) of the subject's eye (E) derived based on a second subset of input signal components ( S_{P}) in the input signal components (S_{CR}, S_{P}) which signal component ( S_{P}) describes the position of the pupil (135) of said eye (E), and
determining (920, 930) that the saccade is in progress if the test parameter (P) exceeds a second threshold value (T2) and generating a tracking signal (D_{GP}) based on the first subset of input signal components (S_{CR}) and the second subset of input signal components (S_{P}) until it is determined that a saccade is in progress;
determining (840) if a fixation point has been reached, meaning the saccade has ended, and if so, generating (850) a tracking signal (D_{GP}) based on the first subset of input signal components (S_{CR}) and the second subset of input signal components (S_{P}).

2. The method according to claim 1, further comprising:
determining if the second point (GP2) has been reached by the subject's eye based on the first subset of input signal components (S_{CR}) of the input signal components (S_{CR}, S_{P}).

3. The method according to anyone of claims 1 or 2, after having determined that the saccade is in progress, further comprising:
continuing to generate the tracking signal (D_{GP}) based on the first subset of input signal components (S_{CR}) of the input signal components during a period of time (T_{osc}) after a point in time (t₂) at which the second point (GP2) was determined.

4. The method according to claim 3, further comprising:
generating the tracking signal (D_{GP}) based on the input signal components (S_{CR}, S_{P}) after expiry of the period of time (T_{osc}).

5. The method according to claim 4, comprising:
determining a duration of the period of time (T_{osc}) based on at least one calibration process executed in respect of said subject, which at least one calibration process establishes a typical time within which a test parameter (P) attains a value below a first threshold value (T1), the test parameter (P) expressing a deviation between a first estimated displacement (D1) of the subject's eye (E) derived based on the first subset of input signal components (S_{CR}) describing the position of the cornea reference point for the eye (E) and a second estimated displacement (D2) of the subject's eye (E) derived based on a second subset of input signal components (S_{P}) component in the input signal components (S_{CR}, S_{P}) which second subset of input signal components (S_{P}) describes the position of the pupil (135) of said eye (E).

6. The method according to claim 4, comprising:
determining a duration of the period of time (T_{osc}) from a default value derived based on at least one calibration process executed in respect of at least one representative subject, which at least one calibration process establishes a typical time within which a test parameter (P) attains a value below a first threshold value (T1), the test parameter (P) expressing a deviation between a first estimated displacement (D1) of the subject's eye (E) derived based on the subset (S_{CR}) describing the position of the cornea reference point for the eye (E) and a second estimated displacement (D2) of the subject's eye (E) derived based on a second subset of input signal components (S_{P}) in the input signal components (S_{CR}, S_{P}) which second subset of signal components (S_{P}) describes the position of the pupil (135) of said eye (E).

7. The method according to any one of the claims 5 or 6, wherein the at least one calibration process comprises:
projecting a moving visual stimulus on a screen, which visual stimulus the subject is prompted to follow with his/her gaze point, and while the subject is doing so
registering the input signal components (S_{CR}, S_{P}), and based thereon
determining the period of time (T_{osc})

8. The method according to claim 1, further comprising determining a point in time (t₂) when the gaze point has reached the second point (GP2) based on:
the first point (GP1), and
a test parameter (P) describing a deviation between a first estimated displacement (D1) of the subject's eye (E) derived based on the first subset of input signal components (S_{CR}) describing the position of the cornea reference point for the eye (E) and a second estimated displacement (D2) of the subject's eye (E) derived based on a second subset of input signal components (S_{P}) in the input signal components (S_{CR}, S_{P}) which second subset of input signal components (S_{P}) describes the position of the pupil (135) of said eye (E).

9. The method according to claim 8, further comprising determining a position for the second point (GP2) based on:
the point in time (t₂) when the gaze point reached the second point (GP2), and
geometric data derived from a calibration process wherein a typical time is established within which a test parameter (P) attains a value below a first threshold value (T1), the test parameter (P) expressing a deviation between a first estimated displacement (D1) of the subject's eye (E) derived based on the first subset of input signal components (S_{CR}) describing the position of the cornea reference point for the eye (E) and a second estimated displacement (D2) of the subject's eye (E) derived based on a second subset of input signal components (S_{P}) in the input signal components (S_{CR}, S_{P}) which second subset of input signal components (S_{P}) describes the position of the pupil (135) of said eye (E).

10. A computer program product (635) loadable into a non-volatile data carrier (630) communicatively connected to a processing circuitry (620), the computer program product (635) comprising software configured to, when the computer program product (635) is run on the processing circuitry (620), cause the processing circuitry (620) to:
obtain (810) input signal components (S_{CR}, S_{P}) describing a position of a cornea reference point a subject's eye (E) and a position of a pupil (135) of said eye (E),
determine (820), based on the input signal components (S_{CR}, S_{P}), that a saccade is in progress during which saccade a gaze point of the subject's eye (E) moves from a first point (GP1) to a second point (GP2) where the gaze point is fixed, and during the saccade
**characterized in that** when the computer program product (635) is run on the processing circuitry (620), the software is further configured to cause the processing circuitry (620) to:
based on said determination that a saccade is in progress, generate (830) a tracking signal (D_{GP}) describing the gaze point of the eye (E) based on a first subset of input signal components (S_{CR}) of the input signal components (S_{CR}, S_{P}), which first subset of input signal components (S_{CR}) describes the position of the cornea reference point for the eye (E),
wherein the software is further configured to cause the processing circuitry (620) to
determine (910) a test parameter (P) describing a deviation between a first estimated displacement (D1) of the subject's eye (E) derived based on the first subset of input signal components (S_{CR}) describing the position of the cornea reference point for the eye (E) and a second estimated displacement (D2) of the subject's eye (E) derived based on a second subset of input signal components ( S_{P}) in the input signal components (S_{CR}, S_{P}) which second subset of input signal components (S_{P}) describes the position of the pupil (135) of said eye (E), and
determine (920, 930) that the saccade is in progress if the test parameter (P) exceeds a second threshold value (T2) and generate a tracking signal (D_{GP}) based on the first subset of input signal components (S_{CR}) and the second subset of input signal components (S_{P}) until it is determined that a saccade is in progress;
determine (840) if a fixation point has been reached, meaning the saccade has ended, and if so, generate (850) a tracking signal (D_{GP}) based on the first subset of input signal components (S_{CR}) and the second subset of input signal components (S_{P}).

11. A non-volatile data carrier (630) containing the computer program product (635) of the claim 10.

12. An eyetracker (610) comprising a processing circuitry (620) configured to:
obtain (810) input signal components (S_{CR}, S_{P}) describing a position of a cornea reference point for a subject's eye (E) and a position of a pupil (135) of said eye (E),
determine (820), based on the input signal components (S_{CR}, S_{P}), that a saccade is in progress during which saccade a gaze point of the subject's eye (E) moves from a first point (GP1) to a second point (GP2) where the gaze point is fixed, and during the saccade
**characterized in that** the processing circuitry (620) is further configured to:
based on said determination that a saccade is in progress, generate (830) a tracking signal (D_{GP}) describing the gaze point of the eye (E) based on a first subset of input signal components (S_{CR}) of the input signal components (S_{CR}, S_{P}), which first subset of input signal components (S_{CR}) describes the position of the cornea reference point for the eye (E),
wherein the processing circuitry (620) is further configured to
determine (910) a test parameter (P) describing a deviation between a first estimated displacement (D1) of the subject's eye (E) derived based on the first subset of input signal components (S_{CR}) describing the position of the cornea reference point for the eye (E) and a second estimated displacement (D2) of the subject's eye (E) derived based on a second subset of input signal components (S_{P}) in the input signal components (S_{CR}, S_{P}) which second subset of input signal components (S_{P}) describes the position of the pupil (135) of said eye (E), and
determine that the saccade is in progress if the test parameter (P) exceeds a second threshold value (T2) and generate a tracking signal (D_{GP}) based on the first subset of input signal components (S_{CR}) and the second subset of input signal components (S_{P}) until it is determined that a saccade is in progress;
determine if a fixation point has been reached, meaning the saccade has ended, and if so, generate a tracking signal (D_{GP}) based on the first subset of input signal components (S_{CR}) and the second subset of input signal components (S_{P}).

## Patentansprüche

1. Verfahren, das in einem Augenverfolger (610) durchgeführt wird, das Verfahren umfassend:
Erhalten (810) von Eingangssignalkomponenten (S_{CR}, S_{P}), die eine Position eines Hornhautreferenzpunkts für ein Auge (E) eines Subjekts und eine Position einer Pupille (135) des Auges (E) beschreiben,
Bestimmen (820), basierend auf den Eingangssignalkomponenten (S_{CR}, S_{P}), dass eine Sakkade im Gange ist, wobei sich, während der Sakkade, ein Blickpunkt des Auges (E) des Subjekts von einem ersten Punkt (GP1) zu einem zweiten Punkt (GP2) bewegt, an dem der Blickpunkt fixiert ist, und während der Sakkade,
**gekennzeichnet ist durch**:
basierend auf der Bestimmung, dass eine Sakkade im Gange ist, Erzeugen (830) eines Verfolgungssignals (D_{GP}), das den Blickpunkt des Auges (E) beschreibt, basierend auf einer ersten Teilmenge von Eingangssignalkomponenten (S_{CR}) der Eingangssignalkomponenten (S_{CR}, S_{P}), wobei die erste Teilmenge von Eingangssignalkomponenten (S_{CR}) die Position des Hornhautreferenzpunkts für das Auge (E) beschreibt;
das Verfahren ferner umfassend
Bestimmen (910) eines Testparameters (P), der eine Abweichung zwischen einer ersten geschätzten Verschiebung (D1) des Auges (E) des Subjekts, die basierend auf der ersten Teilmenge von Eingangssignalkomponenten (S_{CR}) abgeleitet wird, die die Position des Hornhautreferenzpunkts für das Auge (E) beschreibt, und einer zweiten geschätzten Verschiebung (D2) des Auges (E) des Subjekts beschreibt, die basierend auf einer zweiten Teilmenge von Eingangssignalkomponenten (S_{P}) in den Eingangssignalkomponenten (S_{CR}, S_{P}) abgeleitet wird, wobei die Signalkomponente (S_{P}) die Position der Pupille (135) des Auges (E) beschreibt, und
Bestimmen (920, 930), dass die Sakkade im Gange ist, falls der Testparameter (P) einen zweiten Schwellenwert (T2) überschreitet, und Erzeugen eines Verfolgungssignals (D_{GP}) basierend auf der ersten Teilmenge von Eingangssignalkomponenten (S_{CR}) und der zweiten Teilmenge von Eingangssignalkomponenten (S_{P}), bis bestimmt wird, dass eine Sakkade im Gange ist;
Bestimmen (840), ob ein Fixierungspunkt erreicht wurde, was bedeutet, dass die Sakkade beendet ist, und falls ja, Erzeugen (850) eines Verfolgungssignals (D_{GP}) basierend auf der ersten Teilmenge von Eingangssignalkomponenten (S_{CR}) und der zweiten Teilmenge von Eingangssignalkomponenten (S_{P}).

2. Verfahren nach Anspruch 1, ferner umfassend:
Bestimmen, ob der zweite Punkt (GP2) durch das Auge des Subjekts erreicht wurde, basierend auf der ersten Teilmenge von Eingangssignalkomponenten (S_{CR}) der Eingangssignalkomponenten (S_{CR}, S_{P}).

3. Verfahren nach einem der Ansprüche 1 oder 2, nachdem bestimmt wurde, dass die Sakkade im Gange ist, ferner umfassend:
Weitererzeugen des Verfolgungssignals (D_{GP}) basierend auf der ersten Teilmenge von Eingangssignalkomponenten (S_{CR}) der Eingangssignalkomponenten während einer Zeitspanne (T_{osc}) nach einem Zeitpunkt (t₂), zu dem der zweite Punkt (GP2) bestimmt wurde.

4. Verfahren nach Anspruch 3, ferner umfassend:
Erzeugen des Verfolgungssignals (D_{GP}) basierend auf den Eingangssignalkomponenten (S_{CR}, S_{P}) nach einem Ablauf der Zeitspanne (T_{osc}).

5. Verfahren nach Anspruch 4, umfassend:
Bestimmen einer Dauer der Zeitspanne (T_{osc}) basierend auf mindestens einem Kalibrierungsprozess, der in Bezug auf das Subjekt ausgeführt wird, wobei der mindestens eine Kalibrierungsprozess eine typische Zeit festlegt, innerhalb der ein Testparameter (P) einen Wert unterhalb eines ersten Schwellenwerts (T1) erreicht, wobei der Testparameter (P) eine Abweichung zwischen einer ersten geschätzten Verschiebung (D1) des Auges (E) des Subjekts, die basierend auf der ersten Teilmenge von Eingangssignalkomponenten (S_{CR}) abgeleitet wird, der die Position des Hornhautreferenzpunkts für das Auge (E) beschreibt, und einer zweiten geschätzten Verschiebung (D2) des Auges (E) des Subjekts ausdrückt, die basierend auf einer zweiten Teilmenge von Eingangssignalkomponenten (S_{P}) in den Eingangssignalkomponenten (S_{CR}, S_{P}) abgeleitet wird, wobei die zweite Teilmenge von Eingangssignalkomponenten (S_{P}) die Position der Pupille (135) des Auges (E) beschreibt.

6. Verfahren nach Anspruch 4, umfassend:
Bestimmen einer Dauer der Zeitspanne (T_{osc}) aus einem Standardwert, der basierend auf mindestens einem Kalibrierungsprozess, der in Bezug auf mindestens ein repräsentatives Subjekt ausgeführt wird, abgeleitet wird, wobei der mindestens eine Kalibrierungsprozess eine typische Zeit festlegt, innerhalb der ein Testparameter (P) einen Wert unterhalb eines ersten Schwellenwerts (T1) erreicht, wobei der Testparameter (P) eine Abweichung zwischen einer ersten geschätzten Verschiebung (D1) des Auges (E) des Subjekts, die basierend auf der Teilmenge (S_{CR}) abgeleitet wird, die die Position des Hornhautreferenzpunkts für das Auge (E) beschreibt, und einer zweiten geschätzten Verschiebung (D2) des Auges (E) des Subjekts ausdrückt, die basierend auf einer zweiten Teilmenge von Eingangssignalkomponenten (S_{P}) in den Eingangssignalkomponenten (S_{CR}, S_{P}) abgeleitet wird, wobei die zweite Teilmenge von Signalkomponenten (S_{P}) die Position der Pupille (135) des Auges (E) beschreibt.

7. Verfahren nach einem der Ansprüche 5 oder 6, wobei der mindestens eine Kalibrierungsprozess umfasst:
Projizieren eines sich bewegenden visuellen Stimulus auf einen Bildschirm, wobei das Subjekt aufgefordert wird, den visuellen Stimulus mit seinem Blickpunkt zu verfolgen, und während das Subjekt dies tut
Registrieren der Eingangssignalkomponenten (S_{CR}, S_{P}), und basierend darauf
Bestimmen der Zeitspanne (T_{osc})

8. Verfahren nach Anspruch 1, ferner umfassend das Bestimmen eines Zeitpunkts (t₂), zu dem der Blickpunkt den zweiten Punkt (GP2) erreicht hat, basierend auf:
dem ersten Punkt (GP1), und
einem Testparameter (P), der eine Abweichung zwischen einer ersten geschätzten Verschiebung (D1) des Auges (E) des Subjekts, die basierend auf der ersten Teilmenge von Eingangssignalkomponenten (S_{CR}) abgeleitet wird, die die Position des Hornhautreferenzpunkts für das Auge (E) beschreiben, und einer zweiten geschätzten Verschiebung (D2) des Auges (E) des Subjekts beschreibt, die basierend auf einer zweiten Teilmenge von Eingangssignalkomponenten (S_{P}) in den Eingangssignalkomponenten (S_{CR}, S_{P}) abgeleitet wird, wobei die zweite Teilmenge von Signalkomponenten (S_{P}) die Position der Pupille (135) des Auges (E) beschreibt.

9. Verfahren nach Anspruch 8, ferner umfassend das Bestimmen einer Position für den zweiten Punkt (GP2) basierend auf:
dem Zeitpunkt (t₂), zu dem der Blickpunkt den zweiten Punkt (GP2) erreichte, und
geometrischen Daten, die aus einem Kalibrierungsprozess abgeleitet werden, wobei eine typische Zeit festgelegt wird, innerhalb der ein Testparameter (P) einen Wert unterhalb eines ersten Schwellenwerts (T1) erreicht, wobei der Testparameter (P) eine Abweichung zwischen einer ersten geschätzten Verschiebung (D1) des Auges (E) des Subjekts, die basierend auf der ersten Teilmenge von Eingangssignalkomponenten (S_{CR}) abgeleitet ist, die die Position des Hornhautreferenzpunkts für das Auge (E) beschreibt, und einer zweiten geschätzten Verschiebung (D2) des Auges (E) des Subjekts ausdrückt, die basierend auf einer zweiten Teilmenge von Eingangssignalkomponenten (S_{P}) in den Eingangssignalkomponenten (S_{CR}, S_{P}) abgeleitet ist, wobei die zweite Teilmenge von Eingangssignalkomponenten (S_{P}) die Position der Pupille (135) des Auges (E) beschreibt.

10. Computerprogrammprodukt (635), das in einen nichtflüchtigen Datenträger (630), der mit einer Verarbeitungsschaltung (620) kommunikativ verbunden ist, ladbar ist, das Computerprogrammprodukt (635) umfassend Software, die konfiguriert ist, um, wenn das Computerprogrammprodukt (635) auf der Verarbeitungsschaltung (620) laufen lassen wird, die Verarbeitungsschaltung (620) zu veranlassen zum:
Erhalten (810) von Eingangssignalkomponenten (S_{CR}, S_{P}), die eine Position eines Hornhautreferenzpunkts eines Auges (E) des Subjekts und eine Position einer Pupille (135) des Auges (E) beschreiben,
Bestimmen (820), basierend auf den Eingangssignalkomponenten (S_{CR}, S_{P}), dass eine Sakkade im Gange ist, wobei sich, während der Sakkade, ein Blickpunkt des Auges (E) des Subjekts von einem ersten Punkt (GP1) zu einem zweiten Punkt (GP2) bewegt, an dem der Blickpunkt fixiert ist, und während der Sakkade
**dadurch gekennzeichnet, dass,** wenn das Computerprogrammprodukt (635) auf der Verarbeitungsschaltung (620) laufen gelassen wird, die Software ferner konfiguriert ist, um die Verarbeitungsschaltung (620) zu veranlassen zum:
basierend auf der Bestimmung, dass eine Sakkade im Gange ist, Erzeugen (830) eines Verfolgungssignals (D_{GP}), das den Blickpunkt des Auges (E) beschreibt, basierend auf einer ersten Teilmenge von Eingangssignalkomponenten (S_{CR}) der Eingangssignalkomponenten (S_{CR}, S_{P}), wobei die erste Teilmenge von Eingangssignalkomponenten (S_{CR}) die Position des Hornhautreferenzpunkts für das Auge (E) beschreibt,
wobei die Software ferner konfiguriert ist, um die Verarbeitungsschaltung (620) zu veranlassen zum
Bestimmen (910) eines Testparameters (P), der eine Abweichung zwischen einer ersten geschätzten Verschiebung (D1) des Auges (E) des Subjekts, die basierend auf der ersten Teilmenge von Eingangssignalkomponenten (S_{CR}) abgeleitet wird, die die Position des Hornhautreferenzpunkts für das Auge (E) beschreibt, und einer zweiten geschätzten Verschiebung (D2) des Auges (E) des Subjekts beschreibt, die basierend auf einer zweiten Teilmenge von Eingangssignalkomponenten (S_{P}) in den Eingangssignalkomponenten (S_{CR}, S_{P}) abgeleitet wird, wobei die zweite Teilmenge von Eingangssignalkomponenten (S_{P}) die Position der Pupille (135) des Auges (E) beschreibt, und
Bestimmen (920, 930), dass die Sakkade im Gange ist, falls der Testparameter (P) einen zweiten Schwellenwert (T2) überschreitet, und Erzeugen eines Verfolgungssignals (D_{GP}) basierend auf der ersten Teilmenge von Eingangssignalkomponenten (S_{CR}) und der zweiten Teilmenge von Eingangssignalkomponenten (S_{P}), bis bestimmt wird, dass eine Sakkade im Gange ist;
Bestimmen (840), ob ein Fixierungspunkt erreicht wurde, was bedeutet, dass die Sakkade beendet ist, und falls ja, Erzeugen (850) eines Verfolgungssignals (D_{GP}) basierend auf der ersten Teilmenge von Eingangssignalkomponenten (S_{CR}) und der zweiten Teilmenge von Eingangssignalkomponenten (S_{P}).

11. Nichtflüchtiger Datenträger (630), der das Computerprogrammprodukt (635) nach Anspruch 10 enthält.

12. Augenverfolger (610), umfassend eine Verarbeitungsschaltung (620), die konfiguriert ist zum:
Erhalten (810) von Eingangssignalkomponenten (S_{CR}, S_{P}), die eine Position eines Hornhautreferenzpunkts für ein Auge (E) des Subjekts und eine Position einer Pupille (135) des Auges (E) beschreiben,
Bestimmen (820), basierend auf den Eingangssignalkomponenten (S_{CR}, S_{P}), dass eine Sakkade im Gange ist, wobei sich, während der Sakkade, ein Blickpunkt des Auges (E) des Subjekts von einem ersten Punkt 5 (GP1) zu einem zweiten Punkt (GP2) bewegt, an dem der Blickpunkt fixiert ist, und während der Sakkade
**dadurch gekennzeichnet, dass** die Verarbeitungsschaltung (620) ferner konfiguriert ist zum:
basierend auf der Bestimmung, dass eine Sakkade im Gange ist, Erzeugen (830) eines Verfolgungssignals (D_{GP}), das den Blickpunkt des Auges (E) beschreibt, basierend auf einer ersten Teilmenge von Eingangssignalkomponenten (S_{CR}) der Eingangssignalkomponenten (S_{CR}, S_{P}), wobei die erste Teilmenge von Eingangssignalkomponenten (S_{CR}) die Position des Hornhautreferenzpunkts für das Auge (E) beschreibt,
die Verarbeitungsschaltung (620) ferner konfiguriert ist zum
Bestimmen (910) eines Testparameters (P), der eine Abweichung zwischen einer ersten geschätzten Verschiebung (D1) des Auges (E) des Subjekts, die basierend auf der ersten Teilmenge von Eingangssignalkomponenten (S_{CR}) abgeleitet wird, die die Position des Hornhautreferenzpunkts für das Auge (E) beschreibt, und einer zweiten geschätzten Verschiebung (D2) des Auges (E) des Subjekts beschreibt, die basierend auf einer zweiten Teilmenge von Eingangssignalkomponenten (S_{P}) in den Eingangssignalkomponenten (S_{CR}, S_{P}) abgeleitet wird, wobei die zweite Teilmenge von Eingangssignalkomponenten (S_{P}) die Position der Pupille (135) des Auges (E) beschreibt, und
Bestimmen, dass die Sakkade im Gange ist, falls der Testparameter (P) einen zweiten Schwellenwert (T2) überschreitet, und Erzeugen eines Verfolgungssignals (D_{GP}) basierend auf der ersten Teilmenge von Eingangssignalkomponenten (S_{CR}) und der zweiten Teilmenge von Eingangssignalkomponenten (S_{P}), bis bestimmt wird, dass eine Sakkade im Gange ist;
Bestimmen, ob ein Fixierungspunkt erreicht wurde, was bedeutet, dass die Sakkade beendet ist, und falls ja, Erzeugen eines Verfolgungssignals (D_{GP}) basierend auf der ersten Teilmenge von Eingangssignalkomponenten (S_{CR}) und der zweiten Teilmenge von Eingangssignalkomponenten (S_{P}).

## Revendications

1. Procédé réalisé dans un oculomètre (610), le procédé comprenant :
l'obtention (810) de composantes de signal d'entrée (S_{CR}, S_{P}) décrivant une position d'un point de référence de cornée pour l'œil (E) d'un sujet et une position d'une pupille (135) dudit œil (E),
la détermination (820), en fonction des composantes de signal d'entrée (S_{CR}, S_{P}), du fait qu'une saccade est en cours, saccade pendant laquelle un point de regard de l'œil (E) du sujet se déplace d'un premier point (GP1) à un second point (GP2) où le point de regard est fixe, et pendant la saccade,
**caractérisé en ce que** :
en fonction de ladite détermination du fait qu'une saccade est en cours, la génération (830) d'un signal de suivi (D_{GP}) décrivant le point de regard de l'œil (E) en fonction d'un premier sous-ensemble de composantes de signal d'entrée (S_{CR}) des composantes de signal d'entrée (S_{CR}, S_{P}), lequel premier sous-ensemble de composantes de signal d'entrée (S_{CR}) décrit la position du point de référence de cornée pour l'œil (E) ;
le procédé comprenant en outre
la détermination (910) d'un paramètre d'essai (P) décrivant un écart entre un premier déplacement estimé (D1) de l'œil (E) du sujet dérivé en fonction du premier sous-ensemble de composantes de signal d'entrée (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}) laquelle composante de signal (S_{P}) décrit la position de la pupille (135) dudit œil (E), et
la détermination (920, 930) du fait que la saccade est en cours si le paramètre d'essai (P) dépasse une seconde valeur seuil (T2) et la génération d'un signal de suivi (D_{GP}) en fonction du premier sous-ensemble de composantes de signal d'entrée (S_{CR}) et du second sous-ensemble de composantes de signal d'entrée (S_{P}) jusqu'à ce qu'il soit déterminé qu'une saccade est en cours ;
la détermination (840) du fait de savoir si un point de fixation a été atteint, ce qui signifie que la saccade est terminée, et si c'est le cas, la génération (850) d'un signal de suivi (D_{GP}) en fonction du premier sous-ensemble de composantes de signal d'entrée (S_{CR}) et du second sous-ensemble de composantes de signal d'entrée (S_{P}).

2. Procédé selon la revendication 1, comprenant en outre :
la détermination du fait de savoir si le second point (GP2) a été atteint par l'œil du sujet en fonction du premier sous-ensemble de composantes de signal d'entrée (S_{CR}) des composantes de signal d'entrée (S_{CR}, S_{P}).

3. Procédé selon l'une quelconque des revendications 1 ou 2, après la détermination du fait que la saccade est en cours, comprenant en outre :
la poursuite de la génération du signal de suivi (D_{GP}) en fonction du premier sous-ensemble de composantes de signal d'entrée (S_{CR}) des composantes de signal d'entrée pendant une période de temps (T_{osc}) après un point dans le temps (t₂) auquel le second point (GP2) a été déterminé.

4. Procédé selon la revendication 3, comprenant en outre :
la génération du signal DE SUIVI (D_{GP}) en fonction des composantes de signal d'entrée (S_{CR}, S_{P}) après l'expiration de la période de temps (T_{osc}).

5. Procédé selon la revendication 4, comprenant :
la détermination d'une durée de la période de temps (T_{osc}) en fonction d'au moins un processus d'étalonnage exécuté à l'égard dudit sujet, lequel au moins un processus d'étalonnage établit un temps typique pendant lequel un paramètre d'essai (P) atteint une valeur inférieure à une première valeur seuil (T1), le paramètre d'essai (P) exprimant un écart entre un premier déplacement estimé (D1) de l'œil (E) du sujet dérivé en fonction du premier sous-ensemble de composantes de signal d'entrée (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}), lequel second sous-ensemble de composantes de signal d'entrée (S_{P}) décrit la position de la pupille (135) dudit œil (E).

6. Procédé selon la revendication 4, comprenant :
la détermination d'une durée de la période de temps (T_{osc}) à partir d'une valeur par défaut dérivée en fonction d'au moins un processus d'étalonnage exécuté à l'égard d'au moins un sujet représentatif, lequel au moins un processus d'étalonnage établit un temps typique pendant lequel un paramètre d'essai (P) atteint une valeur inférieure à une première valeur seuil (T1), le paramètre d'essai (P) exprimant un écart entre un premier déplacement estimé (D1) de l'œil (E) du sujet dérivé en fonction du sous-ensemble (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}), lequel second sous-ensemble de composantes de signal (S_{P}) décrit la position de la pupille (135) dudit œil (E).

7. Procédé selon l'une quelconque des revendications 5 ou 6, dans lequel l'au moins un processus d'étalonnage comprend :
la projection d'un stimulus visuel en mouvement sur un écran, stimulus visuel que le sujet est invité à suivre avec son point de regard, et tandis que le sujet le fait
l'enregistrement des composantes de signal d'entrée (S_{CR}, S_{P}), et en fonction de celles-ci
la détermination de la période de temps (T_{osc}).

8. Procédé selon la revendication 1, comprenant en outre la détermination d'un point dans le temps (t₂) auquel le point de regard a atteint le second point (GP2) en fonction :
du premier point (GP1), et
d'un paramètre d'essai (P) décrivant un écart entre un premier déplacement estimé (D1) de l'œil (E) du sujet dérivé en fonction du premier sous-ensemble de composantes de signal d'entrée (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}), lequel second sous-ensemble de composantes de signal d'entrée (S_{P}) décrit la position de la pupille (135) dudit œil (E).

9. Procédé selon la revendication 8, comprenant en outre la détermination d'une position pour le deuxième point (GP2) en fonction :
du point dans le temps (t₂) auquel le point de regard a atteint le second point (GP2), et
de données géométriques dérivées d'un processus d'étalonnage dans lequel un temps typique est établi pendant lequel un paramètre d'essai (P) atteint une valeur inférieure à une première valeur seuil (T1), le paramètre d'essai (P) exprimant un écart entre un premier déplacement estimé (D1) de l'œil (E) du sujet dérivé en fonction du premier sous-ensemble de composantes de signal d'entrée (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}), lequel second sous-ensemble de composantes de signal d'entrée (S_{P}) décrit la position de la pupille (135) dudit œil (E).

10. Produit-programme d'ordinateur (635) pouvant être chargé dans un support de données non volatil (630) connecté en communication à une circuiterie de traitement (620), le produit-programme d'ordinateur (635) comprenant un logiciel configuré pour, lorsque le produit-programme d'ordinateur (635) est exécuté sur la circuiterie de traitement (620), amener la circuiterie de traitement (620) à :
obtenir (810) des composantes de signal d'entrée (S_{CR}, S_{P}) décrivant une position d'un point de référence de cornée pour l'œil (E) d'un sujet et une position d'une pupille (135) dudit œil (E),
déterminer (820), en fonction des composantes de signal d'entrée (S_{CR}, S_{P}), qu'une saccade est en cours, saccade pendant laquelle un point de regard de l'œil (E) du sujet se déplace d'un premier point (GP1) à un second point (GP2) où le point de regard est fixe, et pendant la saccade
**caractérisé en ce que** lorsque le produit-programme d'ordinateur (635) est exécuté sur la circuiterie de traitement (620), le logiciel est en outre configuré pour amener la circuiterie de traitement (620) à :
en fonction de ladite détermination du fait qu'une saccade est en cours, générer (830) un signal de suivi (D_{GP}) décrivant le point de regard de l'œil (E) en fonction d'un premier sous-ensemble de composantes de signal d'entrée (S_{CR}) des composantes de signal d'entrée (S_{CR}, S_{P}), lequel premier sous-ensemble de composantes de signal d'entrée (S_{CR}) décrit la position du point de référence de cornée pour l'œil (E),
dans lequel le logiciel est en outre configuré pour amener la circuiterie de traitement (620) à
déterminer (910) un paramètre d'essai (P) décrivant un écart entre un premier déplacement estimé (D1) de l'œil (E) du sujet dérivé en fonction du premier sous-ensemble de composantes de signal d'entrée (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}) lequel second sous-ensemble de composantes de signal d'entrée (S_{P}) décrit la position de la pupille (135) dudit œil (E), et
déterminer (920, 930) que la saccade est en cours si le paramètre d'essai (P) dépasse une seconde valeur seuil (T2) et générer un signal de suivi (D_{GP}) en fonction du premier sous-ensemble de composantes de signal d'entrée (S_{CR}) et du second sous-ensemble de composantes de signal d'entrée (S_{P}) jusqu'à ce qu'il soit déterminé qu'une saccade est en cours ;
déterminer (840) si un point de fixation a été atteint, ce qui signifie que la saccade est terminée, et si c'est le cas, générer (850) un signal de suivi (D_{GP}) en fonction du premier sous-ensemble de composantes de signal d'entrée (S_{CR}) et du second sous-ensemble de composantes de signal d'entrée (S_{P}).

11. Support de données non volatil (630) contenant le produit-programme d'ordinateur (635) selon la revendication 10.

12. Oculomètre (610) comprenant une circuiterie de traitement (620) configurée pour :
obtenir (810) des composantes de signal d'entrée (S_{CR}, S_{P}) décrivant une position d'un point de référence de cornée pour l'œil (E) d'un sujet et une position d'une pupille (135) dudit œil (E),
déterminer (820), en fonction des composantes de signal d'entrée (S_{CR}, S_{P}), qu'une saccade est en cours, saccade pendant laquelle un point de regard de l'œil (E) du sujet se déplace d'un premier point (GP1) à un second point (GP2) où le point de regard est fixe, et pendant la saccade
**caractérisé en ce que** la circuiterie de traitement (620) est en outre configurée pour :
en fonction de ladite détermination du fait qu'une saccade est en cours, générer (830) un signal de suivi (D_{GP}) décrivant le point de regard de l'œil (E) en fonction d'un premier sous-ensemble de composantes de signal d'entrée (S_{CR}) des composantes de signal d'entrée (S_{CR}, S_{P}), lequel premier sous-ensemble de composantes de signal d'entrée (S_{CR}) décrit la position du point de référence de cornée pour l'œil (E),
dans lequel la circuiterie de traitement (620) est en outre configuré pour
déterminer (910) un paramètre d'essai (P) décrivant un écart entre un premier déplacement estimé (D1) de l'œil (E) du sujet dérivé en fonction du premier sous-ensemble de composantes de signal d'entrée (S_{CR}) décrivant la position du point de référence de cornée pour l'œil (E) et un second déplacement estimé (D2) de l'œil (E) du sujet dérivé en fonction d'un second sous-ensemble de composantes de signal d'entrée (S_{P}) dans les composantes de signal d'entrée (S_{CR}, S_{P}) lequel second sous-ensemble de composantes de signal d'entrée (S_{P}) décrit la position de la pupille (135) dudit œil (E), et
déterminer que la saccade est en cours si le paramètre d'essai (P) dépasse une seconde valeur seuil (T2) et générer un signal de suivi (D_{GP}) en fonction du premier sous-ensemble de composantes de signal d'entrée (S_{CR}) et du second sous-ensemble de composantes de signal d'entrée (S_{P}) jusqu'à ce qu'il soit déterminé qu'une saccade est en cours ;
déterminer si un point de fixation a été atteint, ce qui signifie que la saccade est terminée, et si c'est le cas, générer un signal de suivi (D_{GP}) en fonction du premier sous-ensemble de composantes de signal d'entrée (S_{CR}) et du second sous-ensemble de composantes de signal d'entrée (S_{P}).
